# EUROPÄISCHE PATENTSCHRIFT

(11) **EP 2 702 096 B1**
(45) Veröffentlichungstag und Bekanntmachung des Hinweises auf die Patenterteilung: **27.07.2016**
(21) Anmeldenummer: 12717665.9
(22) Anmeldetag: 24.04.2012
(51) Int. Cl.: C08J 9/12

(54) **POLYURETHANSCHAUM UND VERFAHREN ZU SEINER HERSTELLUNG**
POLYURETHANE FOAM AND METHOD FOR PRODUCING SAME
MOUSSE DE POLYURÉTHANNE ET PROCÉDÉ DE FABRICATION DE LADITE MOUSSE

(30) Priorität: 29.04.2011 DE 102011050013
(43) Veröffentlichungstag der Anmeldung: 05.03.2014
(73) Patentinhaber: Covestro Deutschland AG, 51373 Leverkusen (DE)
(72) Erfinder: LINDNER, Stefan, 50670 Köln (DE); FRIEDERICHS, Wolfgang, 50933 Köln (DE); STREY, Reinhard, 41540 Dormagen (DE); SOTTMANN, Thomas, 50823 Köln (DE); ENGELEN, Diana, 51379 Leverkusen (DE); CHALBI, Agnes, 50354 Hürth (DE); BECKER, Nils, 50937 Köln (DE)
(74) Vertreter: Levpat
(86) Internationale Anmeldenummer: PCT/EP2012/057427
(87) Internationale Veröffentlichungsnummer: WO 2012/146568

(56) Entgegenhaltungen:
- WO-A1-2007/094780
- WO-A2-2004/058386
- US-A1- 2004 054 022

## Beschreibung

Die vorliegende Erfindung betrifft einen Polyurethanschaum, der erhältlich ist aus der Reaktion einer Mischung umfassend A) eine gegenüber Isocyanaten reaktive Verbindung; B) ein Treibmittel ausgewählt aus der Gruppe umfassend lineare, verzweigte oder cyclische C₁- bis C₆-Kohlenwasserstoffe, lineare, verzweigte oder cyclische C₁- bis C₆-Fluorkohlenwasserstoffe, N₂, O₂, Argon und/oder CO₂, wobei das Treibmittel B) im überkritischen oder nahekritischen Zustand vorliegt; und C) ein Polyisocyanat.

Die Erfindung betrifft weiterhin ein Verfahren zur Herstellung eines solchen Polyurethanschaums.

Nanozelluläre oder nanoporöse Polymerschaumstoffe sind aufgrund von theoretischen Betrachtungen besonders gute Materialien für die Wärmeisolation. Hierbei liegen die inneren Abmessungen der Schaumstrukturen im Bereich der mittleren freien Weglänge eines Gasmoleküls. Auf diese Weise kann der Anteil des Gases am Wärmetransport verringert werden. Eine häufig in der Wärmedämmung verwendete Polymergruppe sind Polyurethane.

Bei der Herstellung von Polyurethanschäumen wird eine Polyolkomponente, in welcher auch ein Treibmittel enthalten ist, mit einem Isocyanat zur Reaktion gebracht. Durch die Reaktion von Isocyanat mit Wasser entsteht Kohlendioxid, das auch als Treibmittel wirkt.

Der für die Schaumbildung und damit für die spätere Zellgröße des ausgehärteten Schaums entscheidende Schritt ist die Nukleierung von Treibmitteln, da jede Zelle im Schaum aus einer Gasblase entstanden ist. Hierbei ist zu beobachten, dass in der Regel nach der Nukleierung keine neuen Gasblasen entstehen, sondern Treibmittel in bereits bestehende Gasblasen hineindiffundiert.

Die Zugabe von Stabilisatoren unterstützt die Emulgierung der verschiedenen Komponenten, beeinflusst die Nukleierung und verhindert die Koaleszenz der wachsenden Gasblasen. Außerdem beeinflussen sie die Zellöffnung. Bei offenzelligen Schäumen werden die Membranen der wachsenden Poren geöffnet und die Stege der Poren bleiben bestehen.

Ein möglicher Ansatz ist es, ein überkritisches Treibmittel in der Reaktionsmischung zu emulgieren und dann nach einer Druckerniedrigung den Schaum auszuhärten. Als Variante davon ist das POSME-Verfahren (principle of supercritical micro emulsion expansion) bekannt. In diesem liegt das Treibmittel in Form einer Mikroemulsion vor. Mikroemulsionen bilden sich unter bestimmten Bedingungen, welche unter anderem von der Konzentration der Emulgatoren und der Temperatur abhängen. Mikroemulsionen zeichnen sich dadurch aus, dass sie stabil sind und dass die unpolare Phase, also hier das Treibmittel, in sehr kleinen Tröpfchen innerhalb der polaren Phase vorliegen kann. Die Durchmesser solcher Tröpfchen können in einem Bereich von 1 bis 100 Nanometen liegen.

DE 102 60 815 A1 offenbart aufgeschäumtes Material und ein Herstellverfahren für das aufgeschäumte Material. Aufgeschäumtes Material mit Schaumblasen in Nanogröße soll erzeugt werden, ohne dass die Energiebarriere, die üblicherweise bei Phasenumwandlungen und Keimbildungsprozessen auftritt, überwunden werden muss. Verbunden damit ist das Ziel, ein aufgeschäumtes Material kontrollierbar zu erzeugen, welches eine Anzahldichte von Schaumblasen zwischen 10¹² und 10¹⁸ pro cm³ sowie einen mittleren Durchmesser der Schaumblasen zwischen 10 nm und 10 µm hat. Grundlage ist die Dispersion eines zweiten Fluids in Form von Pools in einer Matrix eines ersten Fluids. In einem Reaktionsraum liegen das erste Fluid als Matrix und das zweite Fluid in Pools vor. Durch Druck- und/oder Temperaturänderung wird das zweite Fluid in einen nahe- oder überkritischen Zustand mit einer flüssigkeitsnahen Dichte überführt. Somit liegt das zweite Fluid vollständig oder nahezu vollständig in Pools vor, die im gesamten ersten Fluid gleichmäßig verteilt sind. Durch Druckentlastung kehrt das zweite Fluid in einen Zustand gasförmiger Dichte zurück, wobei die Pools zu Schaumblasen in Nanometer-Größe aufgebläht werden. Es muss keine Energiebarriere überwunden werden, noch müssen die Treibmittelmoleküle zu den wachsenden Blasen diffundieren.

Als erstes Fluid wird hier allgemein eine polymerisierbare Substanz vorgeschlagen. Ausdrücklich erwähnt werden jedoch nur Acrylamid, welches zu Polyacrylamid polymerisiert, und Melamin, welches zu Melamin-Harz polymerisiert. Das zweite Fluid sollte aus einer Stoffgruppe von Kohlenwasserstoffen wie Methan oder Ethan, weiterhin Alkanolen, Fluorchlorkohlenwasserstoffen oder CO₂ ausgewählt sein. Weiterhin wird ein amphiphiles Material eingesetzt, welches mindestens einen dem ersten Fluid zugeneigten Block und mindestens einem dem zweiten Fluid zugeneigten Block aufweisen sollte.

Hinsichtlich Polyurethanschäumen offenbart WO 2007/094780 A1 eine Harzzusammensetzung mit einem Polyol, einem mit einer kurzkettigen Verbindung initiierten ethoxylierten/propoxylierten Tensid sowie einem Kohlenwasserstoff als Treibmittel. Durch das ethoxylierte/propoxylierte Tensid wird die Löslichkeit und/oder Kompatibilität des Kohlenwasserstoff-Treibmittels erhöht und die Phasenstabilität der Harzzusammensetzung verbessert. Die Harzzusammensetzung eignet sich zur Reaktion mit polyfunktionellen organischen Isocyanaten für die Herstellung von zellulären Polyurethan- und Polyisocyanuratschäumen.

Die Tenside werden erhalten durch die Reaktion von Ethylenoxid und Propylenoxid mit einem Initiator aus der Gruppe von Verbindungen mit einem alkylenoxidaktiven Wasserstoff-Atom und einer C₁ bis C₆ aliphatischen oder alicyclischen Kohlenwasserstoffgruppe, Verbindungen mit einem alkylenoxidaktiven Wasserstoff-Atom und einer C₆ bis C₁₀ Aryl- oder Alkylaryl-Kohlenwasserstoffgruppe oder Kombinationen davon. Der Initiator wird vorzugsweise aus der Gruppe der C₁ bis C₆ aliphatischen oder alicyclischen Alkohole, Phenol, C₁ bis C₄ Alkylphenole und deren Kombinationen ausgewählt.

Als Beispiel wird durch Butanol initiiertes Propylenoxid/Ethylenoxid-Tensid genannt. Alternativ kann das Tensid auch ein alkoxyliertes Triglycerid-Addukt oder ein ethoxyliertes Derivat eines Sorbitanesters umfassen. Das Treibmittel kann ein C₄ bis C₇ aliphatischer Kohlenwasserstoff, C₄ bis C₇ cycloaliphatischer Kohlenwasserstoff oder eine Kombination davon sein. Als Beispiel werden Pentane genannt.

In den genannten Beispielen wird jedoch keine Polyolzusammensetzung offenbart, in welcher durch die Wahl der Tenside das Treibmittel in Form einer Mikroemulsion vorliegt.

Spezielle Siloxantenside werden unter anderem in US 2005/0131090 A1 behandelt. Offenbart wird hier ein Verfahren zur Herstellung von Polyurethan-Hartschäumen durch Reaktion eines Polyisocyanats und eines Polyols in Gegenwart eines Urethanisierungskatalysators, eines Treibmittels, optional Wasser und eines Silikontensids. Eingesetzte Treibmittel sind C₄- oder C₅-Kohlenwasserstoffe oder ihre Mischungen. Die Treibmittel haben ein mittleres Molekulargewicht von ≤ 72 g/mol und einen Siedepunkt im Bereich von 27,8 bis 50 °C. Das Silikontensid umfasst ein Polyether-Polysiloxan-Copolymer, welches durch die folgende allgemeine Formel dargestellt wird: (CH₃)₃-Si-O- (Si(CH₃)₂-O)ₓ- (Si(CH₃)(R)O)_{y}-Si(CH₃)₃, worin gilt:
R = (CH₂)₃-O-(-CH₂-CH₂-P)ₐ- (CH₂-CH(CH₃) -O)_{b}-R" und worin R" für H, (CH₂)_{z}CH₃ oder C(O)CH₃ steht. Weiterhin gilt: x+y+2 ist 60-130, x/y ist 5-14 und z ist 0-4. Das Gesamtmolekulargewicht des Tensids, basierend auf obiger Formel, ist 7000-30,000 g/mol. Der Gewichtsanteil des Siloxans in dem Tensid beträgt 32-70 Gewichts-%, das mittlere Molekulargewicht BAMW (blend average molecular weight) des Polyetheranteils ist 450-1000 g/mol und der Gehalt an Ethylenoxid, ausgedrückt in mol-%, in dem Polyetheranteil beträgt 70-100 mol-%. Diese Veröffentlichung betrifft jedoch keine Mikroemulsionen oder Treibmittel im überkritischen Zustand. Vielmehr wird das Siloxantensid als Zellstabilisierungsmittel eingesetzt.

GB 2 365 013 A offenbart alkylenoxidmodifizierte Silikonglykole für stabile Polyesterpolyol-Zusammensetzungen. Eine Polyesterpolyol-Zusammensetzung umfasst ein Phthalsäureanhydridinitiiertes Polyesterpolyol, ein C₄-C₆-Kohlenwasserstofftreibmittel und ein alkylenmodifiziertes Silikonglykol-Kompatibiliserungsmittel mit einem HLB-Wert von ungefähr 5 bis ungefähr 8. Das Treibmittel ist in der Polyolzusammensetzung löslich, wodurch das mit solchen Treibmitteln verbundene Risiko in der Herstellung von Polymerhartschaumartikeln verringert wird. Hartschäume mit guter Dimensionsstabilität und verbesserten Isolationseigenschaften werden bereitgestellt. Ebenfalls offenbart wird ein isocyanatmodifiziertes Silikonglykol-Kompatibilisierungsmittel.

In dieser Patentanmeldung wird angegeben, dass in einigen Fällen ein bestimmtes Treibmittel mit dem Polyol und anderen Komponenten eine Mikroemulsion bildet. Allerdings ist nicht offenbart, ob hierbei für das Treibmittel überkritische Bedingungen herrschen. Vielmehr bezieht sich der Hinweis auf Mikroemulsionen auf den Test zur Bestimmung der Lagerstabilität der Polyolzusammensetzungen. In diesem Test werden die Polyolzusammensetzung und das Treibmittel in einem Glas mit Deckel vermischt, geschüttelt und für fünf Tage bei Raumtemperatur gelagert. Wenn keine Phasentrennung auftritt, wird das Treibmittel für in der Polyolzusammensetzung löslich und die Zusammensetzung für lagerstabil befunden. Eine Aufbewahrung in einem Glas mit Deckel bei Raumtemperatur lässt allerdings keine Bedingungen erwarten, unter denen ein C₄-C₆-Kohlenwasserstoff im überkritischen Zustand vorliegt.

Weiterhin wird in dieser Patentanmeldung erwähnt, dass in der Herstellung der Schäume die Ausgangsstoffe bei einer Temperatur von 15 °C bis 90 °C, vorzugsweise von 20 °C bis 35 °C in eine offene oder geschlossene Form eingebracht werden können. Hierbei kann ein Druck oberhalb des Atmosphärendrucks herrschen. Das Mischen des Isocyanats mit der Polyolzusammensetzung, die gelöstes Treibmittel enthält, kann durch Rühren oder unter hohem Druck durch Injektion geschehen. Die Temperatur der Form kann 20 °C bis 110 °C, vorzugsweise 30 °C bis 60 °C und insbesondere 45 °C bis 50 °C betragen. Auch hier finden sich keine Hinweise darauf, dass für das Treibmittel überkritische Bedingungen herrschen.

Die schlagartige Entspannung CO₂-haltiger Reaktionsmischungen wird in WO 2001/98389 A1 beschrieben. Diese Patentanmeldung betrifft ein Verfahren zur Herstellung von Polyurethan-Blockschaum, wobei eine Kohlendioxid enthaltende Polyurethau-Reaktivmischung plötzlich von einem Druck oberhalb des Gleichgewichtslösungsdruckes des Kohlendioxids auf Normaldruck entspannt wird. Die flüssige Polyurethan-Reaktivmischung wird unter Freisetzung von gelöstem Kohlendioxid aufschäumt, die aufgeschäumte Mischung wird auf ein Substrat aufgebracht und anschließend zum Blockschaum ausgehärtet. Das Kohlendioxid wird zunächst bei einem wesentlich oberhalb des Gleichgewichtslösungsdruckes liegenden Druck in der Reaktivmischung oder mindestens einer der Komponenten Polyol und Isocyanat vollständig gelöst. Anschließend wird der Druck auf einen Druck nahe des Gleichgewichtslösungsdruckes herabgesetzt, wobei zwischenzeitlich der Gleichgewichtslösungsdruck unter Freisetzung geringer Mengen des Kohlendioxids unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlendioxid wieder vollständig aufgelöst wird. Allerdings finden sich hier keine Hinweise auf nanozelluläre Schäume oder überkritische Bedingungen für das Treibmittel.

US 2004/0054022 A1 offenbart ein Herstellungsverfahren für Polyurethan-Hartschaum mit einem mittleren Verhältnis von Längs- und Querschnittdurchmesser der Zellen von 1,0 bis 1,4 und einer Dichte von 20 bis 40 kg/m³. Aus der Reaktion von Wasser und Polyisocyanaten erzeugtes CO₂ sowie überkritisches, unterkritisches oder flüssiges CO₂ wird als Treibmittel eingesetzt. Vor dem Vermischen mit dem Polyisocyanat wird Wasser und besagtes CO₂ im flüssigen Zustand dem Polyol beigefügt. Bevorzugte Gehalte für den CO₂-Anteil liegen zwischen 0,5% und 3%. Dieses lässt sich vor dem Hintergrund verstehen, dass bei größeren Mengen von CO₂ eine schlagartige Verdampfung zu befürchten wäre.

Die vor Allem eingesetzten fluor- und silikonhaltigen Tenside zur Stabilisierung von überkritischem CO₂ in einer Emulsion sind jedoch vergleichsweise teuer. Die vorliegende Erfindung hat sich daher die Aufgabe gestellt, einen Polyurethanschaum und ein Verfahren zu dessen Herstellung anzugeben, bei dem ein preiswerteres Tensid zur Stabilisierung von Mikroemulsionen des Treibmittels eingesetzt werden kann.

Erfindungsgemäß wird diese Aufgabe gelöst durch einen Polyurethanschaum, erhältlich aus der Reaktion einer Mischung umfassend:
A) eine gegenüber Isocyanaten reaktive Verbindung;
B) ein Treibmittel ausgewählt aus der Gruppe umfassend lineare, verzweigte oder cyclische C₁-bis C₆-Kohlenwasserstoffe, lineare, verzweigte oder cyclische C₁- bis C₆-Fluorkohlenwasserstoffe, N₂, O₂, Argon und/oder CO₂, wobei das Treibmittel B) im überkritischen oder nahekritischen Zustand vorliegt; und
C) ein Polyisocyanat;
wobei die gegenüber Isocyanaten reaktive Verbindung A) einen hydrophoben Teil und einen hydrophilen Teil umfasst und eine durchschnittliche Hydroxyl-Funktionalität von mehr als 1 aufweist, der hydrophobe Teil eine gesättigte oder ungesättigte Kohlenwasserstoffkette mit mindestens 6 C-Atomen umfasst, und der hydrophile Teil Alkylenoxideinheiten und/oder Estereinheiten umfasst.

Es wurde überraschenderweise gefunden, dass sich durch die Wahl der erfindungsgemäß vorgesehenen Verbindung A) auch zu Polyurethanschäumen weiterverarbeitbare Mikroemulsionen des Treibmittels, insbesondere von CO₂, herstellen lassen. Dadurch liegt das Treibmittel fein verteilt in einer eigenen Phase vor, wodurch sich besonders feinzellige Schäume herstellen lassen. Bei der Verwendung der Treibmittelmischung im überkritischen oder nahekritischen Zustand ist kein Nukleierungsschritt nötig. Daher ist die Herstellung feinzelliger Schäume möglich. Die Komponente A) kann einerseits als Tensid angesehen werden, andererseits aber auch als Polyol und somit Reaktionspartner für Polyisocyanate. Es ist erfindungsgemäß mit eingeschlossen, dass die Komponente A) den Hauptanteil oder sogar den alleinigen Anteil an NCO-reaktiven Verbindungen in einer Polyurethanrezeptur darstellt.

Erfindungsgemäß umfasst die gegenüber Isocyanaten reaktive Verbindung A) einen hydrophilen und einen hydrophoben Bereich. Der HLB-Wert (engl. Abk.: hydrophilic-lipophilic-balance) beschreibt den hydrophilen und lipophilen Anteil von Tensiden. Der HLB-Wert für nichtionische Tenside kann folgendermaßen berechnet werden: HLB = 20 · (1 - Mₕ/M), wobei Mₕ die Molmasse des hydrophoben Anteils eines Moleküls ist und M die Molmasse des gesamten Moleküls. Der HLB-Wert für die gegenüber Isocyanaten reaktiven Verbindung A) kann beispielsweise zwischen 4 und 18, bevorzugt zwischen 8 und 16, und besonders bevorzugt zwischen 10 und 15 liegen. Der hydrophobe Teil umfasst eine gesättigte oder ungesättigte Kohlenwasserstoffkette mit mindestens 6 C-Atomen, vorzugsweise mindestens 8 C-Atomen, bevorzugt mindestens 12 C-Atomen und besonders bevorzugt mindestens 14 C-Atomen.

Gesättigte Kohlenwasserstoffketten der gegenüber Isocyanaten reaktiven Verbindung A) lassen sich beispielsweise durch Veresterung von Polyolen mit gesättigten Fettsäuren erhalten. Ein Beispiel für eine geeignete gesättigte Fettsäure ist 2-Ethylhexansäure. Ungesättigte Kohlenwasserstoffketten können neben Einheiten der Form -(H)C=C(H)- selbstverständlich auch gesättigte Einheiten -CH₂-enthalten. Dieses lässt sich durch Veresterung mit ungesättigten Fettsäuren erreichen. Ein Beispiel für eine geeignete ungesättigte Fettsäure ist Ölsäure ((Z)-9-Octadecensäure). Es können auch Mischungen aus Fettsäuren, die aus natürlichen Ölen wie beispielsweise Sojaöl oder Rapsöl erhalten werden, eingesetzt werden.

Die gegenüber Isocyanaten reaktive Verbindung A) ist vorzugsweise eine bei 20 °C flüssige Verbindung, bevorzugt mit einer Viskosität von kleiner als 15000 mPas, besonders bevorzugt kleiner 5000 mPas. Die Viskosität kann beispielsweise nach DIN 53019 bestimmt werden.

Der hydrophile Bereich der gegenüber Isocyanaten reaktiven Verbindung A) umfasst vorzugsweise Ethylenoxideinheiten -[-CH₂-CH₂-O-]- und/oder Carbonsäureestereinheiten. Die Verbindung A) lässt sich beispielsweise durch partielle Alkoxylierung eines mindestens trifunktionellen Polyols erhalten, so dass eine OH-Gruppe des Polyols für eine Veresterung mit einer Fettsäure zur Verfügung steht. Die Verbindung A) lässt weiterhin beispielsweise durch eine Veresterung von Ölsäure mit Adipinsäure, Trimethylolpropan und/oder Diethylenglykol erhalten. Vorzugsweise hat die gegenüber Isocyanaten reaktive Verbindung A) eine mittlere Anzahl von OH-Gruppen je Molekül von 1,5 bis 5, besonders bevorzugt 2,5 bis 3,5.

In der Herstellung des Polyurethanschaums wird überkritisches oder nahekritisches Treibmittel B) verwendet. Im Rahmen der vorliegenden Erfindung liegen nahekritische Bedingungen dann vor, wenn die folgende Bedingung erfüllt ist: (T_{c} - T)/T ≤ 0,4 und/oder (p_{c} - p)/p ≤ 0,4. Hierbei bedeuten T die im Verfahren herrschende Temperatur, T_{c} die kritische Temperatur des Treibmittels oder Treibmittelgemisches, p der im Verfahren herrschende Druck und p_{c} der kritische Druck für das Treibmittel oder Treibmittelgemisch. Vorzugsweise liegen nahekritische Bedingungen vor, wenn gilt: (T_{c} - T)/T ≤ 0,3 und/oder (p_{c} - p)/p ≤ 0,3 und besonders bevorzugt (T_{c} - T)/T ≤ 0,2 und/oder (p_{c}-p)/p ≤ 0,2. Ohne auf eine Theorie festgelegt zu sein, wird angenommen, dass durch die Wahl von geeigneten Tensidkomponenten sich Emulsionen oder Mikroemulsionen des überkritischen oder nahekritischen Treibmittels in der Phase mit gegenüber Isocyanaten reaktiven Komponenten bilden.

Das Treibmittel kann vorzugsweise eine eigene Phase in der Reaktionsmischung bilden. Es kann beispielsweise überkritisches Kohlendioxid verwendet werden. Es ist möglich, dass das Kohlendioxid während der Reaktion zum Polyurethanschaum gebildet wird, beispielsweise durch die Reaktion von Isocyanaten mit Wasser oder mit Säuren. Beispiele für weitere Treibmittel sind lineare C₁-C₆-Kohlenwasserstoffe, verzweigte C₄-C₆-Kohlenwasserstoffe und cyclische C₃-C₆-Kohlenwasserstoffe. Spezielle Beispiele für Treibmittel sind Methan, Ethan, Propan, n-Butan, iso-Butan, n-Pentan, iso-Pentan, Cyclopentan, iso-Hexan, und/oder Cyclohexan. Weitere Beispiele sind die teil- oder perfluorierten Derivate von Methan, Ethan, Propan, n-Butan, iso-Butan, n-Pentan, iso-Pentan, Cyclopentan, Hexan, iso-Hexan, 2,3-Dimethylbutan und/oder Cyclohexan. Vorzugsweise wird Kohlendioxid oder eine Treibmittelmischung mit mehr als 30 Gewichts-%, bevorzugt mehr als 50 Gewichts-% und besonders bevorzugt mehr als 70 Gewichts-% Kohlendioxid verwendet

Der Anteil des Treibmittels in der Reaktionsmischung umfassend Komponenten A) und B), aber ohne C), kann beispielsweise ≥ 5 Gewichts-% bis ≤ 60 Gewichts-% betragen.

Die Komponente C) ist ein Polyisocyanat, also ein Isocyanat mit einer NCO-Funktionalität von ≥ 2. Folglich liegt nun ein Reaktionsgemisch vor, welches zu Polyurethan- oder aber auch Polyisocyanuratschäumen reagieren kann. Dieses Reaktionsgemisch kann direkt in einem Mischkopf erzeugt werden.

Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4-und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindüsocyanate) mit C₁ bis C₆-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Selbstverständlich können in der Herstellung des Polyurethanschaums noch weitere übliche Hilfs-und Zusatzstoffe wie Katalysatoren, Flammschutzmittel, Trennmittel, Füllstoffe und dergleichen eingesetzt werden.

Die Anzahl der NCO-Gruppen in der Polyisocyanatkomponente D) und die Anzahl der gegenüber Isocyanaten reaktiven Gruppen der Komponente A) können beispielsweise in einem Zahlenverhältnis von ≥ 50:100 bis ≤ 500:100 zueinander stehen. Diese Kenngröße kann auch in einem Bereich von ≥ 160:100 bis ≤ 330:100 oder aber auch von ≥ 80:100 bis ≤ 140:100 liegen.

Die Mischung umfassend die Komponenten A), B) und C) kann beispielsweise erhalten werden, indem in einem Hochdruck-Mischkopf unter für das Treibmittel überkritischen oder nahekritischen Bedingungen alle Komponenten mit Ausnahme der Polyisocyanatkomponente vorgelegt werden und dann mit dem Polyisocyanat C) versetzt werden.

Geeignete Drücke für die Herstellung des Polyurethanschaums können beispielsweise im Bereich von ≥ 40 bar bis ≤ 300 bar liegen. Geeignete Temperaturen sind beispielsweise ≥ 10 °C bis ≤ 80 °C und vorzugsweise ≥ 25 °C bis ≤ 60 °C. Insbesondere bevorzugt sind Drücke und Temperaturen oberhalb des kritischen Punktes von CO₂, also ≥ 73,7 bar und ≥ 31 °C.

Sofern zusätzliche NCO-reaktive Verbindungen in der Reaktionsmischung vorgesehen sind, können insbesondere Polyole, Polyamine, Polyaminoalkohole. und Polythiole zum Einsatz kommen.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, α, α, α', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylmethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerythritoltetrakisthioglycolat, Pentaerythritoltetrakis(3-mercaptopropionat) und 1,2-Bis((2-mercaptoethyl)thio)-3-mercaptopropan.

Die Polyole können beispielsweise ein zahlenmittleres Molekulargewicht Mₙ von ≥ 62 g/mol bis ≤ 8000 g/mol, bevorzugt von ≥ 90 g/mol bis ≤ 5000 g/mol und mehr bevorzugt von ≥ 92 g/mol bis ≤ 1000 g/mol aufweisen. Die OH-Zahl der Komponente A) gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der genannten Polyole ist zum Beispiel ≥ 2, beispielsweise in einem Bereich von ≥ 2 bis ≤ 6, vorzugsweise vor ≥ 2,1 bis ≤ 4 und mehr bevorzugt von ≥ 2,2 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedennolekulare, Hydroxylgruppen aufweisende Ester derartiger Polyole mit Dicarbonsäuren.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernste i n säure, **Dodekandisäure,** Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutydenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle sind zum Beispiel Diole mit zahlenmittleren Molekulargewichten Mₙ von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1, 5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobonrylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Die vorliegende Erfindung wird nachfolgend anhand von bevorzugten Ausführungsformen geschildert. Sie können beliebig kombiniert werden, sofern sich aus dem Kontext nicht das Gegenteil ergibt.

In einer Ausführungsform weist die gegenüber Isocyanaten reaktive Verbindung eine durchschnittliche Hydroxyl-Funktionalität von ≥ 1,5 bis ≤ 5 auf. Vorzugsweise beträgt diese Funktionalität ≥ 1,8 bis ≤ 2,2.

In einer weiteren Ausführungsform weist die gegenüber Isocyanaten reaktive Verbindung A) eine Hydroxylzahl von ≥ 50 mg KOH/g bis ≤ 500 mg KOH/g auf. Dieser Wert kann anhand von DIN 53240 bestimmt werden. Bevorzugte Bereiche für die OH-Zahlen sind ≥ 70 mg KOH/g bis ≤ 400 mg KOH/g und besonders bevorzugt ≥ 100 mg KOH/g bis ≤ 300 mg KOH/g. Im Falle von Mischungen ist hierunter die mittlere OH-Zahl zu verstehen.

In einer weiteren Ausführungsform beträgt der Anteil der gegenüber Isocyanaten reaktiven Verbindung A) ≥ 0,5 Gewichts-% bis ≤ 40 Gewichts-%, bezogen auf das Gesamtgewicht der

Mischung. Vorzugsweise beträgt der Anteil ≥ 2 Gewichts-% bis ≤ 30 Gewichts-% und mehr bevorzugt ≥ 5 Gewichts-% bis ≤ 20 Gewichts-%.

In einer weiteren Ausführungsform umfasst der hydrophile Teil der gegenüber Isocyanaten reaktiven Verbindung A) eine eingeesterte Fettsäure und der Anteil der eingeesterten Fettsäure beträgt ≥ 0,5 Gewichts-% bis ≤ 25 Gewichts-%, bezogen auf das Gesamtgewicht der Mischung. Bevorzugte Anteile sind ≥ 2 Gewichts-% bis ≤ 15 Gewichts-%, besonders bevorzugt sind ≥ 4 Gewichts-% bis ≤ 10 Gewichts-%.

In einer weiteren Ausführungsform ist die gegenüber Isocyanaten reaktive Verbindung A) aus der Reaktion eines partiell alkoxylierten Polyols mit einer Fettsäure erhältlich.

Vorzugsweise umfasst die gegenüber Isocyanaten reaktive Verbindung A) einen Carbonsäureester eines alkoxylierten Sorbitans.

Es ist weiterhin bevorzugt, dass die gegenüber Isocyanaten reaktive Verbindung ein Ester der allgemeinen Formel (I) ist: 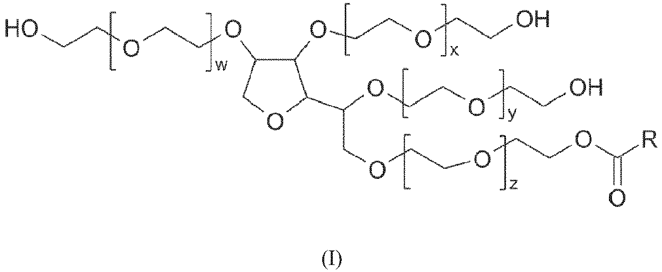 mit w+x+y+z ≥ 16 bis ≤ 22 und wobei R ein gesättigter oder ungesättigter Kohlenwasserstoffrest mit ≥ 12 bis ≤ 18 Kohlenstoffatomen ist.

Ein besonders bevorzugtes Beispiel ist Polysorbat 80, welches durch die Formel (II) beschrieben wird: 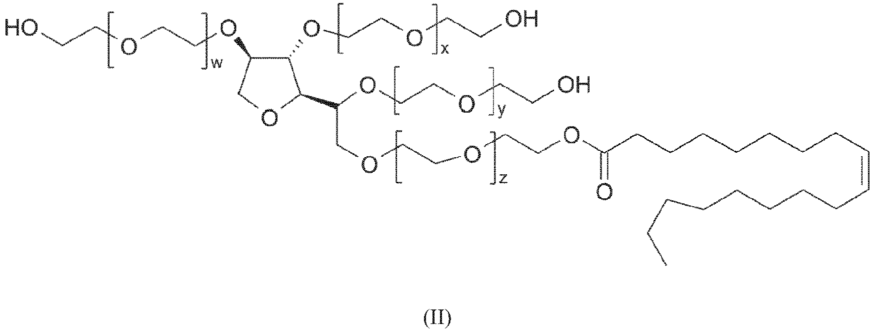 mit w+x+y+z = 20.

In einer weiteren Ausführungsform umfasst die gegenüber Isocyanaten reaktive Komponente A) ein Polyetheresterpolyol mit einer Hydroxylzahl von ≥ 200 mg KOH/g bis ≤ 600 mg KOH/g und ein kurzkettiges Polyol mit einer Hydroxylzahl von ≥ 800 mg KOH/g. Geeignete Polyetheresterpolyole sind unter anderem bifunktionelle Polyetheresterpolyol, welche durch Addition von Alkylenoxiden und insbesondere Ethylenoxid an eine Mischung aus Phthalsäureanhydrid, Diethylenglycol und Ethylendiamin erhalten werden und eine OH-Zahl von ≥ 275 mg KOH/g bis ≤ 325 mg KOH/g aufweisen.

Solche Produkte mit dem Handelsnamen Desmophen® VP.PU 1431 sind von der Firma Bayer MaterialScience AG erhältlich. Die OH-Zahl des Polyesterpolyols kann auch ≥ 290 mg KOH/g bis ≤ 320 mg KOH/g betragen. Kurzkettige Polyole sind insbesondere Polyole mit ≥ 2 bis ≤ 6 C-Atomen. Bevorzugt ist Glycerin. Dieses hat eine OH-Zahl von 1827 mg KOH/g. Durch die Zugabe des kurzkettigen Polyols lässt sich die Polarität der Polyolphase günstig erhöhen.

In einer weiteren Ausführungsform beträgt der Anteil des Treibmittels B) ≥ 2 Gewichts-% bis ≤ 10 Gewichts-%, bezogen auf das Gesamtgewicht der Mischung. Bevorzugte Anteile sind ≥ 4 Gewichts-% bis ≤ 8 Gewichts-%.

In einer weiteren Ausführungsform umfasst die Polyisocyanatkomponente C) monomeres und/oder polymeres Diphenylmethan-4,4'-diisocyanat. Solch ein Polyisocyanat ist unter dem Handelsnamen Desmodur ® 44V70L als ein Gemisch von Diphenylmethan-4,4'-diisocyanat (MDI) mit Isomeren und höherfünktionellen Homologen von der Firma Bayer MaterialScience erhältlich.

In einer weiteren Ausführungsform weist der Polyurethanschaum eine Rohdichte von ≥ 20 kg/m³ bis ≤ 160 kg/m³ auf. Die Rohdichte kann gemäß DIN EN 1602 bestimmt werden und beträgt vorzugsweise ≥ 30 kg/m³ bis ≤ 120 kg/m³ und mehr bevorzugt von ≥ 50 kg/m³ bis ≤ 80 kg/m³ aufweisen. Bevorzugte Verwendungen für den erfindungsgemäßen Schaum liegen in der Wärmeisolierung, beispielsweise für die Herstellung von Dämmplatten, Metallverbundpaneelen oder für Kühlschrankisolierungen.

Ein weiterer Gegenstand der vorliegenden Erfindung ist ein Verfahren zur Herstellung eines Polyurethanschaums, umfassend die Schritte:
- Bereitstellung einer Mischung der Verbindungen A) B) und C), wie sie obenstehend beschrieben wird, in einem Mischkopf; und
- Austragen der Mischung aus dem Mischkopf, wobei beim Austragen der in der Mischung herrschende Druck auf Atmosphärendruck erniedrigt wird.

Beim Austragen der Mischung aus dem Mischkopf wird der in der Mischung herrschende Druck auf Atmosphärendruck erniedrigt. Unter Atmosphärendruck ist hierbei insbesondere ein Druck von ≥ 0,9 bar bis ≤ 1,1 bar zu verstehen. Hierbei geht das Treibmittel in den unterkritischen und vorzugsweise in den gasförmigen Zustand über. Beispielsweise kann das Reaktionsgemisch aus dem Mischkopf einfach in eine offene Form eingebracht werden oder kontinuierlich für die Herstellung von Platten, wie zum Beispiel durch Freischaumanlagen oder Doppeltransportanlagen, genutzt werden. Es ist erfindungsgemäß ausdrücklich mit eingeschlossen, dass zwischen dem Verlassen der Reaktionsgemisches aus dem Mischkopf und dem Entspannen auf Atmosphärendruck noch Zwischenstationen vorgesehen sind, in denen ein Druck herrscht, der zwischen dem Druck im Mischkopf und dem Atmosphärendruck liegt.

In einer Ausführungsform des erfindungsgemäßen Verfahrens herrscht nach dem Bereitstellen der Mischung der Verbindungen A) B) und C) ein Druck von ≥ 40 bar bis ≤ 200 bar, vorzugsweise ein Druck von ≥ 60 bar bis ≤ 150 bar, besonders bevorzugt ein Druck von ≥ 70 bar bis ≤ 120 bar. Dieser Zustand kann insbesondere in einem Mischkopf und nach einem Mischkopf herrschen. Der Druck kann auch ≥ 80 bar bis ≤ 120 bar betragen. Bei solchen Drücken können überkritische oder nahekritische Bedingungen für das eingesetzte Treibmittel aufrecht erhalten werden.

In einer weiteren Ausführungsform des erfindungsgemäßen Verfahrens sind in dem Mischkopf oder stromabwärts vom Mischkopf Mittel angeordnet, um den Strömungswiderstand beim Austragen der Mischung umfassend die Komponenten A), B) und C) zu erhöhen. Solche Mittel können beispielsweise in Strömungsrichtung gesehen nach einer Mischkammer des Mischkopfs angeordnete Lochblenden, Gitter, Spaltgitter und/oder Siebe sein. Durch die Erhöhung des Strömungswiderstandes kann gezielt der Druck beeinflusst werden, den die Reaktionsmischung vor dem Austragen aus dem Mischkopf aufweist. Der so eingestellte Druck kann niedriger sein als der Druck beim Mischen der Komponenten der Reaktionsmischung. Auf diese Weise kann auf die Bildung und Expansion von Treibmitteltröpfchen oder Treibmittelbläschen Einfluss genommen werden. Solche Mittel werden beispielsweise in WO 2001/98389 A1 beschrieben.

Die vorliegende Erfindung wird anhand der nachfolgenden Beispiele in Verbindung mit den Figuren weiter erläutert, ohne jedoch darauf beschränkt zu sein.
FIG. 1 eine Auftragung der Temperatur T gegen den Tensidgehalt γ für ein Polyol/Tensidsystem
FIG. 2 eine Auftragung der Temperatur T gegen den Tensidgehalt γ für ein weiteres Polyol/Tensidsystem

In den Beispielen und Figuren gibt der Wert α den relativen Gewichtsanteil des Treibmittels, also der unpolaren Phase, in der Polyol/Treibmittelmischung an. Der Wert Ψ bezeichnet die Massenbrüche der einzelnen Komponenten in der polaren Phase. Der Wert γ bezeichnet den relativen Gewichtsanteil der Tensidkomponente an der Gesamtzusammensetzung. In den Figuren bedeuten die Bezugszeichen 1 ein einphasiges Gebiet, in dem Mikroemulsionen auftreten und 2 ein zweiphasiges Gebiet, wobei das Tensid in der polaren Phase gelöst ist.

Die einzelnen Beispiele betreffen jeweils bestimmte Polyol/Treibmittel/Tensidsysteme. Innerhalb der Beispiele wurden verschiedene Rezepturen mit unterschiedlichen Anteil α des Treibmittels näher charakterisiert. Bei jeweils konstantem Anteil α wurde der Anteil γ der Tensidkomponente verändert. Die Zusammensetzung der Tensidkomponente selber wurde in den jeweiligen Beispielen konstant gehalten. Die Temperatur des Systems wurde notiert und Verbindungslinien zwischen den Messpunkten interpoliert, um die Grenzen zwischen den ein-, zwei- und dreiphasigen Gebieten zu bestimmten. Auf diese Weise wurde ein Diagramm erhalten, welches einem Kahlweit-Fisch-Diagramm (M. Kahlweit, R. Strey, Angewandte Chemie International Edition, Band 28(8), Seite 654 (1985)) vergleichbar ist. Von besonderem Interesse für die Charakterisierung des Systems ist der Schnittpunkt der Verbindungslinien. Bei bekannter Lage des Schnittpunkts im Koordinatensystem von γ und T kann man bei einem geringfügig größeren Tensidanteil γ eine Mikroemulsion erwarten.

### Glossar:

Desmophen® VP.PU 1431: bifunktionelles Polyetheresterpolyol, EO-Addukt an eine Mischung aus Phthalsäureanhydrid, Diethylenglycol und Ethylendiamin mit einer OH-Zahl von 275 bis 325 mg KOH/g und einer Viskosität von 6,5 +/- 1,3 Pa s bei 25 °C; Bayer MaterialScience AG.
Desmorapid® 726b: Katalysator der Firma Bayer MaterialScienceAG
Desmodur® 44V70L: Gemisch von Diphenylmethan-4,4'-diisocyanat (MDI) mit Isomeren und höherfunktionellen Homologen der Firma Bayer MaterialScience AG
Tween® 80: Polysorbat 80 (Polyoxyethylen(20)sorbitan-Monooleat)

### Beispiel 1:

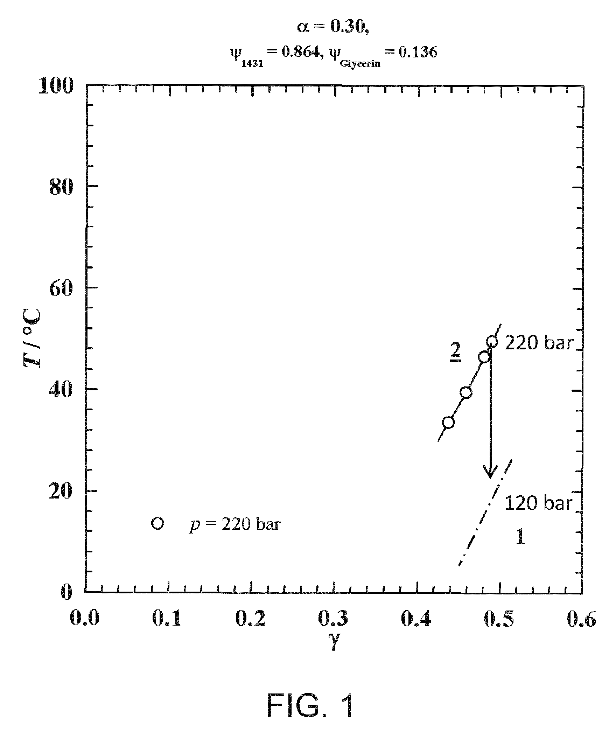

Eine Polyolzusammensetzung mit Desmophen® VP.PU 1431 und Glycerin (Massenanteile: Ψ₁₄₃₁ = 0,864 und Ψ_{Glycerin} = 0,136) sowie Tween® 80 (Treibmittelanteil α = 0,30) wurde bei 220 bar untersucht. Weiterhin wurde eine Druckemiedrigung auf 120 bar durchgeführt. Die Ergebnisse sind in FIG. 1 wiedergegeben. Zu erkennen ist die obere Phasengrenze, welche den Übergang des Systems von einer einphasigen Mikroemulsion (Zustand 1) in den Zustand 2 beschreibt. In diesem Bereich koexistieren eine "Polyol-in-Öl"-Mikroemulsionsphase und eine Polyol-Exzessphase.

### Beispiel 2:

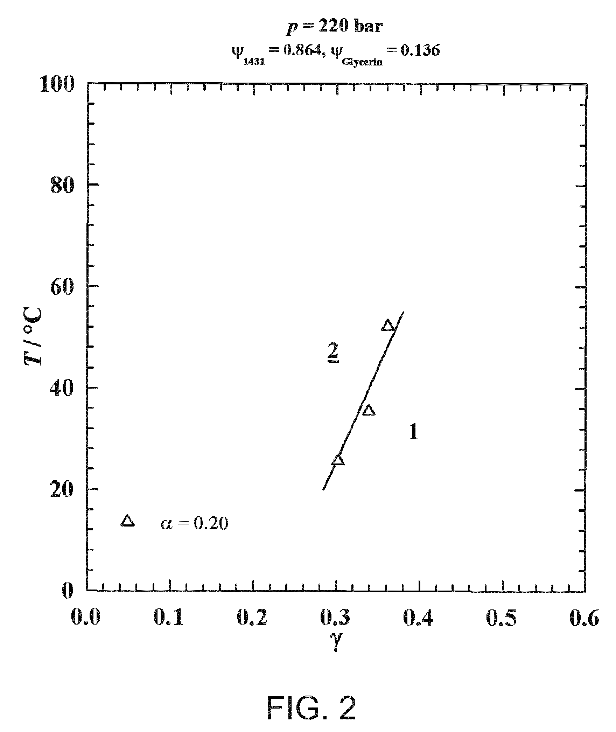

Eine zu Beispiel 1 analoge Polyolzusammensetzung mit Desmophen® VP.PU 1431 und Glycerin (Massenanteile: Ψ₁₄₃₁ = 0,864 und Ψ_{Glycerin} = 0,136) wurde bei 220 bar untersucht. In diesem Beispiel betrug jedoch der Anteil α des Treibmittels CO₂ nur 0,20. Die Ergebnisse sind in FIG. 2 wiedergegeben. Zu erkennen ist die obere Phasengrenze, welche den Übergang der einphasigen Mikroemulsion (Zustand 1) in den Zustand 2 beschreibt. In diesem Bereich koexistieren eine "Polyol-in-Öl"-Mikroemulsionsphase und eine Polyol-Exzessphase. Im Vergleich zu FIG. 1 wird weniger Tensid benötigt (die Phasengrenze verläuft bei kleineren γ-Werten) um den Zustand 1 zu erreichen. Das System ist durch den geringeren Anteil an Treibmittel effizienter geworden.

### Beispiele 3 und 4 sowie Vergleichsbeispiele Vergleich 1 bis Vergleich 8:

Gemäß der in den nachfolgenden Tabellen 1 bis 3 aufgeführten Rezepturen wurden CO₂-getriebene Polyurethanschäume hergestellt. Wenn nicht anders vermerkt, sind Mengenangaben als Gewichtsteile zu verstehen. Die Mischung aus der gegenüber Isocyanaten reaktiven Verbindung A) wurde mit Zusatzkomponenten wie Polyolen und Katalysatoren gemischt. Diese wurde in einer Standard-Hochdruckmischanlage als Polyolkomponente eingesetzt und bei einem Druck von 120 bar mit dem Treibmittel B) vermischt. Hierbei herrschten für das Treibmittel überkritische Bedingungen. In einem Hochdruckmischkopf wurde diese mit einem Polyisocyanat C), das mit einem Druck von 120 bar gefördert wird, vermischt. Die Schussmenge beträgt 60 g/s. Das Auslaufrohr des Mischkopfes hatte einen Innendurchmesser von 8,5 mm und eine Länge von ca. 50 cm. In den Beispielen und einigen Vergleichsbeispielen war im Auslaufrohr nach dem Mischkopf eine Lochblende mit einer in den Tabellen angegebenen Lochgröße vorgesehen. Auf diese Weise konnte der Druck im Mischkopf gezielt eingestellt werden und eine langsamere Druckabsenkung in der Reaktionsmischung erreicht werden. Durch die Lochblende kann der Druck gezielt eingestellt werden. Die Vergleichsbeispiele 1-4, bei denen im Gegensatz zu den Beispielen 1 und 2 gezielt ein niedriger Druck eingestellt wurde, haben eine deutlich höhere Rohdichte und die Vergleichsbeispiele 1 und 3 sind dazu noch grobzellig. Die Vergleichsbeispiele 5 und 6, die ohne Tween® 80, aber mit überkritischem CO₂ als Treibmittel hergestellt wurden, haben eine höhere Rohdichte und sind inhomogen und grobzellig. Vergleichsbeispiele 7 und 8, die ohne Tween® 80 und mit unterkritischen CO₂ hergestellt wurden, haben eine sehr hohe Rohdichte.

**Tabelle 1**

| **Komponenten** | **Beispiel 3** | **Beispiel 4** | **Vergleich 1** | **Vergleich 2** |
|---|---|---|---|---|
| Desmophen® VP.PU1431 | 95,00 | 95,00 | 95,00 | 95,00 |
| Glycerin | 15,00 | 15,00 | 15,00 | 15,00 |
| Tween® 80 | 137,50 | 137,50 | 137,50 | 137,50 |
| DBTDL | 0,09 | 0,09 | 0,09 | 0,09 |
| Desmorapid® 726b | 0,47 | 0,47 | 0,47 | 0,47 |
| | | | | |
| CO₂ | 27,50 | 28,60 | 27,50 | 27,50 |
| | | | | |
| Desmodur® 44V70L | 161,23 | 177,35 | 161,23 | 161,23 |
| | | | | |

| **Prozessparameter** | | | | |
|---|---|---|---|---|
| Isocyanattemperatur [°C] | 34 | 34 | 34 | 34 |
| Polyoltemperatur [°C] | 35 | 36 | 35 | 35 |
| Druck in Mischkammer [bar] | 118-104 | 85-75 | 35-32 | 1,5-1,2 |
| Lochblende [mm] | 0,8 | 0,8 | 1,2 | ohne |
| Rohrdurchmesser [mm] | 8,5 | 8,5 | 8,5 | 8,5 |
| | | | | |

| **Eigenschaften PUR-Schaum** | | | | |
|---|---|---|---|---|
| Freie Dichte Kern [kg/m³] | 67 | 67 | 79 | 121 |
| Kommentar | feinzellig | feinzellig | grobzellig | hohe Rohdichte |
| | | | | |

| **Emulsionsparameter** | | | | |
|---|---|---|---|---|
| γ -Wert CO₂-Polyol-Emulsion | 0,50 | 0,50 | 0,50 | 0,50 |
| Gewichtsanteil Fettsäure [%] | 6,38 | 6,14 | 6,38 | 6,38 |
| Gewichtsanteil CO₂ [%] | 6,30 | 6,30 | 6,30 | 6,30 |
| Gewichtsanteil Tween® 80 [%] | 31,48 | 30,29 | 31,48 | 31,48 |

**Tabelle 2**

| **Komponenten** | **Vergleich 3** | **Vergleich 4** | **Vergleich 5** | **Vergleich** 6 |
|---|---|---|---|---|
| Desmophen® VP.PU1431 | 95,00 | 95,00 | 95,00 | 95,00 |
| Glycerin | 15,00 | 15,00 | 15,00 | 15,00 |
| Tween® 80 | 137,50 | 137,50 | | |
| DBTDL | 0,09 | 0,09 | 0,06 | 0,06 |
| Desmorapid® 726b | 0,47 | 0,47 | 0,29 | 0,29 |
| | | | | |
| CO₂ | 28,60 | 28,60 | 16,70 | 17,60 |
| | | | | |
| Desmodur® 44V70L | 177,35 | 177,35 | 137,89 | 151,67 |
| | | | | |
| **Prozessparameter** | | | | |
| Isocyanattemperatur [°C] | 34 | 34 | 34 | 36 |
| Polyoltemperatur [°C] | 35 | 35 | 34 | 35 |
| Druck in Mischkammer [bar] | 35-31 | 2,4-2,1 | 123-114 | 114-80 |
| Lochblende [mm] | 1,2 | ohne | 0,7 | 0,8 |
| Rohrdurchmesser [mm] | 8,5 | 8,5 | 8,5 | 8,5 |
| | | | | |
| **Eigenschaften PUR-Schaum** | | | | |
| Freie Dichte Kern [kg/m³] | 80 | 140 | 84 | 90 |
| Kommentar | grobzellig | hohe Rohdichte | grobzellig, inhomogen | grobzellig, inhomogen |
| | | | | |
| **Emulsionsparameter** | | | | |
| γ -Wert CO₂-Polyol-Emulsion | 0,50 | 0,50 | 0,00 | 0,00 |
| Gewichtsanteil Fettsäure [%] | 6,14 | 6,14 | 0,00 | 0,00 |
| Gewichtsanteil CO₂ [%] | 6,30 | 6,30 | 6,30 | 6,29 |
| Gewichtsanteil Tween® 80 [%] | 30,29 | 30,29 | 0 | 0 |

**Tabelle 3**

| **Komponenten** | **Vergleich 7** | **Vergleich** 8 |
|---|---|---|
| Desmophen® VP.PU1431 | 95,00 | 95,00 |
| Glycerin | 15,00 | 15,00 |
| Tween® 80 | | |
| DBTDL | 0,06 | 0,06 |
| Desmorapid® 726b | 0,29 | 0,29 |
| | | |
| CO₂ | 16,70 | 17,60 |
| | | |
| Desmodur® 44V70L | 137,89 | 151,67 |
| | | |

| **Prozessparameter** | | |
|---|---|---|
| Isocyanattemperatur [°C] | 34 | 35 |
| Polyoltemperatur [°C] | 35 | 34 |
| Druck in Mischkammer [bar] | 2-1,4 | 1,5-1 |
| Lochblende [mm] | ohne | ohne |
| Rohrdurchmesser [mm] | 8,5 | 8,5 |
| | | |

| **Eigenschaften PUR-Schaum** | | |
|---|---|---|
| Freie Dichte Kern [kg/m³] | 262 | 265 |
| Kommentar | hohe Rohdichte | hohe Rohdichte |
| | | |

| **Emulsionsparameter** | | |
|---|---|---|
| γ -Wert CO₂-Polyol-Emulsion | 0,00 | 0,00 |
| Gewichtsanteil Fettsäure [%] | 0,00 | 0,00 |
| Gewichtsanteil CO₂ [%] | 6,30 | 6,29 |
| Gewichtsanteil Tween® 80 [%] | 0 | 0 |

## Patentansprüche

1. Polyurethanschaum, erhältlich aus der Reaktion einer Mischung umfassend:
A) eine gegenüber Isocyanaten reaktive Verbindung;
B) ein Treibmittel ausgewählt aus der Gruppe umfassend lineare, verzweigte oder cyclische C₁-bis C₆-Kohlenwasserstoffe, lineare, verzweigte oder cyclische C₁- bis C₆-Fluorkohlenwasserstoffe, N₂, O₂, Argon und/oder CO₂, wobei das Treibmittel B) im überkritischen oder nahekritischen Zustand vorliegt; und
C) ein Polyisocyanat;
**dadurch gekennzeichnet, dass**
die gegenüber Isocyanaten reaktive Verbindung A) einen hydrophoben Teil und einen hydrophilen Teil umfasst und eine durchschnittliche Hydroxyl-Funktionalität von mehr als 1 aufweist,
wobei der hydrophobe Teil eine gesättigte oder ungesättigte Kohlenwasserstoffkette mit mindestens 6 C-Atomen umfasst, und
wobei der hydrophile Teil Alkylenoxideinheiten und/oder Estereinheiten umfasst.

2. Polyurethanschaum gemäß Anspruch 1, wobei die gegenüber Isocyanaten reaktive Verbindung eine durchschnittliche Hydroxyl-Funktionalität von ≥ 1,5 bis ≤ 5 aufweist.

3. Polyurethanschaum gemäß Anspruch 1, wobei die gegenüber Isocyanaten reaktive Verbindung A) eine Hydroxylzahl von ≥ 50 mg KOH/g bis ≤ 500 mg KOH/g aufweist.

4. Polyurethanschaum gemäß Anspruch 1, wobei der Anteil der gegenüber Isocyanaten reaktiven Verbindung A) ≥ 0,5 Gewichts-% bis ≤ 40 Gewichts-%, bezogen auf das Gesamtgewicht der Mischung, beträgt.

5. Polyurethanschaum gemäß Anspruch 1, wobei der hydrophile Teil der gegenüber Isocyanaten reaktiven Verbindung A) eine eingeesterte Fettsäure umfasst und der Anteil der eingeesterten Fettsäure ≥ 0,5 Gewichts-% bis ≤ 25 Gewichts-%, bezogen auf das Gesamtgewicht der Mischung, beträgt.

6. Polyurethanschaum gemäß Anspruch 1, wobei die gegenüber Isocyanaten reaktive Verbindung A) aus der Reaktion eines partiell alkoxylierten Polyols mit einer Fettsäure erhältlich ist.

7. Polyurethanschaum gemäß Anspruch 6, wobei die gegenüber Isocyanaten reaktive Verbindung A) einen Carbonsäureester eines alkoxylierten Sorbitans umfasst.

8. Polyurethanschaum gemäß Anspruch 6, wobei die gegenüber Isocyanaten reaktive Verbindung ein Ester der allgemeinen Formel (I) ist: 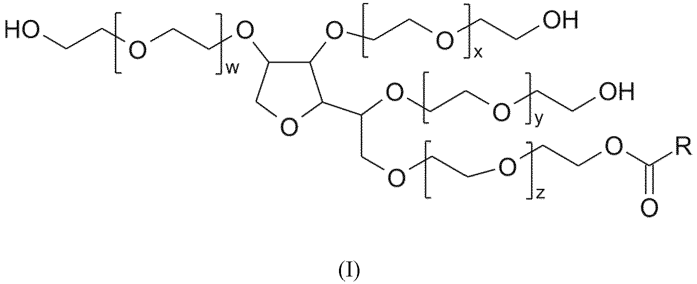 mit w+x+y+z ≥ 16 bis ≤ 22 und wobei R ein gesättigter oder ungesättigter Kohlenwasserstoffrest mit ≥ 12 bis ≤ 18 Kohlenstoffatomen ist.

9. Polyurethanschaum gemäß Anspruch 1, wobei die Reaktionsmischung weiterhin ein Polyetheresterpolyol mit einer Hydroxylzahl von ≥ 200 mg KOH/g bis ≤ 600 mg KOH/g und ein kurzkettiges Polyol mit einer Hydroxylzahl von ≥ 800 mg KOH/g umfasst.

10. Polyurethanschaum gemäß Anspruch 1, wobei der Anteil des Treibmittels B) ≥ 2 Gewichts-% bis ≤ 10 Gewichts-%, bezogen auf das Gesamtgewicht der Mischung, beträgt.

11. Polyurethanschaum gemäß Anspruch 1, wobei die Polyisocyanatkomponente C) monomeres und/oder polymeres Diphenylmethan-4,4'-diisocyanat umfasst.

12. Polyurethanschaum gemäß Anspruch 1 mit einer Rohdichte von ≥ 20 kg/m³ bis ≤ 160 kg/m³.

13. Verfahren zur Herstellung eines Polyurethanschaums, umfassend die Schritte:
- Bereitstellung einer Mischung der Verbindungen A) B) und C), wie sie in einem oder mehreren der Ansprüche 1 bis 10 beschrieben wird, in einem Mischkopf; und
- Austragen der Mischung aus dem Mischkopf, wobei beim Austragen der in der Mischung herrschende Druck auf Atmosphärendruck erniedrigt wird.

14. Verfahren gemäß Anspruch 13, wobei nach dem Bereitstellen der Mischung der Verbindungen A) B) und C) ein Druck von ≥ 40 bar bis ≤ 200 bar herrscht.

15. Verfahren gemäß Anspruch 13, wobei in dem Mischkopf oder stromabwärts vom Mischkopf Mittel angeordnet sind, um den Strömungswiderstand beim Austragen der Mischung umfassend die Komponenten A), B) und C) zu erhöhen.

## Claims

1. Polyurethane foam obtainable from the reaction of a mixture comprising:
A) an isocyanate-reactive compound;
B) a blowing agent selected from the group comprising linear, branched or cyclic C₁-C₆ hydrocarbons, linear, branched or cyclic C₁-C₆ (hydro) fluorocarbons, N₂, O₂, argon and/or CO₂, wherein said blowing agent B) is in the supercritical or near-critical state; and
C) a polyisocyanate;
**characterized in that**
said isocyanate-active compound A) comprises a hydrophobic portion and a hydrophilic portion and has an average hydroxyl functionality of more than 1, wherein the hydrophobic portion comprises a saturated or unsaturated hydrocarbonaceous chain having 6 or more carbon atoms, and
wherein the hydrophilic portion comprises alkylene oxide units and/or ester units.

2. Polyurethane foam according to Claim 1 wherein the isocyanate-reactive compound has an average hydroxyl functionality of ≥ 1.5 to ≤ 5.

3. Polyurethane foam according to Claim 1 wherein said isocyanate-reactive compound A) has a hydroxyl number of ≥ 50 mg KOH/g to ≤ 500 mg KOH/g.

4. Polyurethane foam according to Claim 1 wherein the proportion of said isocyanate-reactive compound A) is ≥ 0.5% by weight to ≤ 40% by weight, based on the overall weight of the mixture.

5. Polyurethane foam according to Claim 1 wherein the hydrophilic portion of said isocyanate-reactive compound A) comprises an intro-esterified fatty acid and the proportion of the intro-esterified fatty acid is ≥ 0.5% by weight to ≤ 25% by weight, based on the overall weight of the mixture.

6. Polyurethane foam according to Claim 1 wherein said isocyanate-reactive compound A) is obtainable from the reaction of a partially alkoxylated polyol with a fatty acid.

7. Polyurethane foam according to Claim 6 wherein said isocyanate-reactive compound A) comprises a carboxylic ester of an alkoxylated sorbitan.

8. Polyurethane foam according to Claim 6 wherein the isocyanate-reactive compound is an ester of the general formula (I): 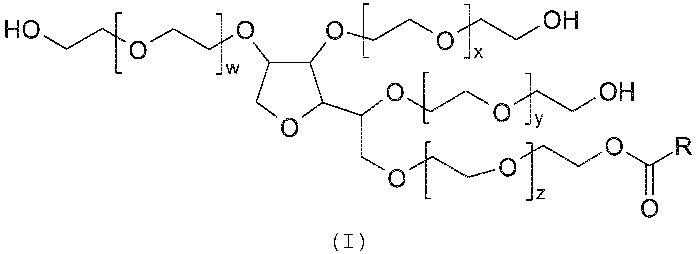 where w+x+y+z ≥ 16 to ≤ 22 and R is a saturated or unsaturated hydrocarbonaceous moiety of ≥ 12 to ≤ 18 carbon atoms.

9. Polyurethane foam according to Claim 1 wherein the reaction mixture further comprises a polyetherester polyol having a hydroxyl number of ≥ 200 mg KOH/g to ≤ 600 mg KOH/g and a short-chain polyol having a hydroxyl number of ≥ 800 mg KOH/g.

10. Polyurethane foam according to Claim 1 wherein the proportion of blowing agent B) is ≥ 2% by weight to 10% by weight, based on the overall weight of the mixture.

11. Polyurethane foam according to Claim 1 wherein said polyisocyanate component C) comprises monomeric and/or polymeric diphenylmethane 4,4'-diisocyanate.

12. Polyurethane foam according to Claim 1 with an apparent density of ≥ 20 kg/m³ to ≤ 160 kg/m³.

13. Method for producing a polyurethane foam comprising the steps of:
- providing a mixture of compounds A) B) and C) as is described in one or more of claims 1 to 10 in a mixing head; and
- discharging the mixture from the mixing head, wherein the pressure prevailing in the mixture is lowered to atmospheric pressure in the course of discharge.

14. Method according to Claim 13 wherein a pressure of ≥ 40 bar to ≤ 200 bar prevails after the step of providing the mixture of compounds A), B) and C).

15. Method according to Claim 13 wherein means are disposed in the mixing head or downstream of the mixing head for elevating the flow resistance in the step of discharging the mixture comprising components A), B) and C).

## Revendications

1. Mousse de polyuréthane, pouvant être obtenue par la réaction d'un mélange comprenant :
A) un composé réactif avec les isocyanates ;
B) un agent gonflant choisi dans le groupe comprenant les hydrocarbures en C₁ à C₆ linéaires, ramifiés ou cycliques, les hydrocarbures fluorés en C₁ à C₆ linéaires, ramifiés ou cycliques, N₂, O₂, l'argon et/ou CO₂, l'agent gonflant B) étant présent à l'état supercritique ou presque critique ; et
C) un polyisocyanate ;
**caractérisé en ce que**
le composé A) réactif avec les isocyanates comprend une partie hydrophobe et une partie hydrophile, et présente une fonctionnalité hydroxyle moyenne supérieure à 1,
la partie hydrophobe comprenant une chaîne hydrocarbonée saturée ou insaturée d'au moins 6 atomes C, et
la partie hydrophile comprenant des unités oxyde d'alkylène et/ou des unités ester.

2. Mousse de polyuréthane selon la revendication 1, dans laquelle le composé réactif avec les isocyanates présente une fonctionnalité hydroxyle moyenne de ≥ 1,5 à ≤ 5.

3. Mousse de polyuréthane selon la revendication 1, dans laquelle le composé A) réactif avec les isocyanates présente un indice hydroxyle de ≥ 50 mg KOH/g à ≤ 500 mg KOH/g.

4. Mousse de polyuréthane selon la revendication 1, dans laquelle la proportion du composé A) réactif avec les isocyanates est de ≥ 0,5 % en poids à ≤ 40 % en poids, par rapport au poids total du mélange.

5. Mousse de polyuréthane selon la revendication 1, dans laquelle la partie hydrophile du composé A) réactif avec les isocyanates comprend un acide gras estérifié et la proportion de l'acide gras estérifié est de ≥ 0,5 % en poids à ≤ 25 % en poids, par rapport au poids total du mélange.

6. Mousse de polyuréthane selon la revendication 1, dans laquelle le composé A) réactif avec les isocyanates peut être obtenu par la réaction d'un polyol partiellement alcoxylé avec un acide gras.

7. Mousse de polyuréthane selon la revendication 6, dans laquelle le composé A) réactif avec les isocyanates comprend un ester d'acide carboxylique d'un sorbitane alcoxylé.

8. Mousse de polyuréthane selon la revendication 6, dans laquelle le composé réactif avec les isocyanates est un ester de formule générale (I) : 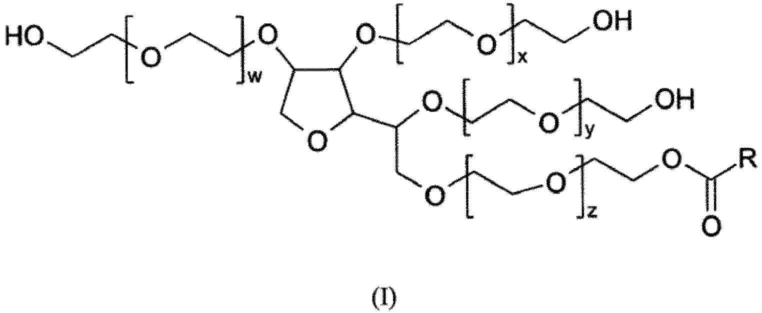 avec w + x + y + z ≤ 16 à ≤ 22, R étant un radical hydrocarboné saturé ou insaturé contenant de ≥ 12 à ≤ 18 atomes de carbone.

9. Mousse de polyuréthane selon la revendication 1, dans laquelle le mélange réactionnel comprend en outre un polyétherester-polyol ayant un indice hydroxyle de ≥ 200 mg KOH/g à ≤ 600 mg KOH/g, et un polyol à chaîne courte ayant un indice hydroxyle de ≥ 800 mg KOH/g.

10. Mousse de polyuréthane selon la revendication 1, dans laquelle la proportion de l'agent gonflant B) est de ≥ 2 % en poids à ≤ 10 % en poids, par rapport au poids total du mélange.

11. Mousse de polyuréthane selon la revendication 1, dans laquelle le composant polyisocyanate C) comprend du 4,4'-diisocyanate de diphénylméthane monomère et/ou polymère.

12. Mousse de polyuréthane selon la revendication 1, ayant une densité brute de ≥ 20 kg/m³ à ≤ 160 kg/m³.

13. Procédé de fabrication d'une mousse de polyuréthane, comprenant les étapes suivantes :
- la préparation d'un mélange des composés A), B) et C), tels que décrits dans une ou plusieurs des revendications 1 à 10, dans une tête de mélange ; et
- le déchargement du mélange de la tête de mélange, la pression qui règne dans le mélange étant abaissée à la pression atmosphérique lors du déchargement.

14. Procédé selon la revendication 13, dans lequel une pression de ≥ 40 bar à ≤ 200 bar règne après la préparation du mélange des composés A), B) et C).

15. Procédé selon la revendication 13, dans lequel des moyens permettant d'augmenter la résistance à l'écoulement lors du déchargement du mélange comprenant les composants A), B) et C) sont agencés dans la tête de mélange ou en aval de la tête de mélange.
